# FASCICULE DE BREVET EUROPEEN

(11) **EP 3 802 313 B1**
(45) Date de publication et mention de la délivrance du brevet: **10.08.2022**
(21) Numéro de dépôt: 19790587.0
(22) Date de dépôt: 07.06.2019
(51) Int. Cl.: B63H 9/06, B63B 15/00, B63H 9/10

(54) **SYSTÈME COMPRENANT UNE VOILE CAPTIVE ET UN POSTE FIXE AVEC DES MOYENS DE PLIAGE DE LA VOILE AU POSTE FIXE**
SYSTEM MIT EINEM ANGEBUNDENEN SEGEL UND EINER FESTEN STATION MIT MITTELN ZUM FALTEN DES SEGELS AN DER FESTEN STATION
SYSTEM COMPRISING A TETHERED SAIL AND A FIXED STATION HAVING MEANS FOR FOLDING THE SAIL AT THE FIXED STATION

(30) Priorité: 11.06.2018 FR 1855078
(43) Date de publication de la demande: 14.04.2021
(73) Titulaire: AIRSEAS, 31300 Toulouse (FR)
(72) Inventeur: ARROUY, Pascal, 82600 AUCAMVILLE (FR); BRAINES, Jeremy, 31820 PIBRAC (FR); CORTET, Emmanuel, 31700 Blagnac (FR); GAGNAIRE, Benoit, 31470 FONSORBES (FR); ORTEGA, Jean-Marc, 31700 BLAGNAC (FR); RIGAUD, Jérome, 81800 COUFOULEUX (FR); HIVER, Vianney, 31100 TOULOUSE (FR)
(74) Mandataire: Brevalex
(86) Numéro de dépôt international: PCT/FR2019/051388
(87) Numéro de publication internationale: WO 2019/239044

(56) Documents cités:
- EP-A1- 2 193 075
- CN-A- 101 786 498
- FR-A1- 2 940 783
- US-B1- 7 287 481

## Description

### DOMAINE TECHNIQUE

L'invention concerne un système comportant un poste fixe auquel est reliée une voile captive avec des moyens pour ramener la voile au poste fixe et pour plier cette voile.

### ÉTAT DE LA TECHNIQUE ANTÉRIEURE

L'invention concerne plus particulièrement un système comprenant un poste fixe et une voile, du type des voiles utilisées en kite-surf ou en parapente, qui est dite captive, c'est-à-dire reliée par un câble de traction à ce poste fixe. En pratique, le poste fixe est installé sur un pont de navire auquel il est rigidement solidarisé, et la voile qui comporte une aile souple avec différentes lignes de commande et de raccordement au câble de traction est déployée en étant rattachée à ce poste fixe, pour tracter le navire. De tels dispositifs sont par exemple connus des documents FR 2 940 783 A1, EP 2 193 075 A1, ou US 7 287 481 B1.

Un tel système de traction peut aussi être utilisé comme convertisseur d'énergie : le poste fixe est alors installé au sol, et la voile entraîne un générateur électrique mis en rotation par le déplacement du câble dû à la traction de la voile sous l'effet du vent.

Lorsqu'une telle installation est destinée à équiper un navire, il s'agit typiquement d'un navire commercial de type cargo, pour lui procurer une traction, additionnellement au système de propulsion motorisé de ce navire, ce qui permet de réaliser une économie de consommation de carburant significative.

Avec une telle installation, il est nécessaire de pouvoir facilement déployer la voile lorsque le vent a une orientation et une force satisfaisante, et de pouvoir la ramener et la plier par exemple lorsque les conditions météorologiques ne sont plus appropriées.

Dans ce cadre, le poste fixe est équipé d'un treuil permettant de sortir et de ramener la voile de façon automatisée, et il comporte également un mât vertical le long duquel la voile doit être pliée une fois qu'elle a été ramenée.

Une telle voile ayant une grande taille lorsqu'elle est dimensionnée pour un navire de type cargo, il est nécessaire de prévoir des moyens pour la plier le long du mât de manière aisée, rapide et sure. En effet, lorsqu'une telle voile présente une envergure de cinquante mètres ou plus, son étendue et sa masse rendent son pliage problématique, ce qui est encore accentué par le fait qu'un navire commercial ne comporte pas d'équipage assez nombreux et compétent pour réaliser une telle opération.

Le but de l'invention est d'apporter une solution pour simplifier le pliage d'une telle voile sur le mât du poste fixe une fois qu'elle a été ramenée à ce poste fixe.

### EXPOSÉ DE L'INVENTION

A cet effet, l'invention a pour objet un système de traction, notamment pour navire, comprenant une voile et un poste fixe incluant un mat et un treuil relié à la voile par un câble de traction, comportant :
- plusieurs lignes de pliage ayant chacune une extrémité fixée à un bord d'attaque de la voile en étant espacées les unes des autres le long de ce bord d'attaque ;
- des moyens pour tirer au moins trois lignes de pliage, afin de ramener les extrémités de ces lignes de pliage fixées au bord d'attaque contre le mât à au moins deux hauteurs différentes le long de ce mât.

Avec cet agencement, lorsque la voile de grandes dimensions a été ramenée au poste fixe, les lignes de pliage installées à demeure sur l'aile de cette voile permettent de la plier depuis le pont.

L'invention concerne également un tel système comprenant :
- un élément bas porté par le câble de traction, chaque ligne de pliage ayant une extrémité portée par cet élément bas ;
- une embase équipant le poste fixe et recevant l'élément bas lorsque la voile est ramenée par le treuil ;
- des organes de renvoi tels que des poulies ou des mousquetons équipant le mât pour recevoir des lignes de pliage ;
- des moyens pour tirer chaque ligne de pliage reçue dans un organe de renvoi, afin de ramener l'extrémité supérieure de chaque ligne de pliage contre le mât.

L'invention concerne également un tel système, dans lequel les moyens pour tirer chaque ligne de pliage comprennent des lignes de commande qui longent le mât en étant passées dans les organes de renvoi avant de ramener la voile avec le treuil, ces lignes de commande étant ensuite raccordées aux lignes de pliage pour tirer sur ces lignes de pliage.

L'invention concerne également un tel système, dans lequel le poste fixe comporte une platine et dans lequel chaque ligne de commande comporte une extrémité équipée d'un organe de raccordement fixé à cette platine en attente avant de ramener la voile avec le treuil.

L'invention concerne également un tel système, dans lequel le poste fixe comporte des treuils pour tirer sur chaque ligne de commande.

L'invention concerne également un tel système, dans lequel chaque ligne de commande a une extrémité équipée d'un organe de raccordement à une extrémité d'une ligne de pliage.

L'invention concerne également un tel système, dans lequel chaque ligne de commande a une extrémité équipée d'un organe de raccordement à une partie de ligne de pliage située entre les extrémités de cette ligne de pliage.

L'invention concerne également un tel système, dans lequel le mât est équipé de coulisseaux portant chacun un organe de renvoi apte à être raccordé à une partie de ligne de pliage située entre les extrémités de cette ligne de pliage en l'entourant, chaque coulisseau étant mobile le long du mât, et des moyens pour tirer des lignes de pliage reçue dans un organe de raccordement.

### BRÈVE DESCRIPTION DES DESSINS

La figure 1 est une vue d'ensemble d'une voile selon l'invention ;
La figure 2 est une vue d'ensemble d'une voile approchant du poste fixe selon l'invention ;
La figure 3 est une vue d'ensemble d'une voile ramenée au poste fixe selon l'invention ;
La figure 4 est une vue d'ensemble d'une voile en début d'opération de pliage conformément à l'invention ;
La figure 5 est une voile en cours d'opération de pliage conformément à l'invention ;
La figure 6 est une voile pliée conformément à l'invention ;
La figure 7 est une vue d'ensemble montrant une platine ainsi qu'une embase et un élément bas en cours d'approche dans le système selon l'invention ;
La figure 8 est une vue d'ensemble montrant une platine ainsi qu'une embase et un élément bas en place dans le système selon l'invention ;
La figure 9 est une vue d'ensemble d'une voile en début d'opération de pliage selon un second mode de réalisation de l'invention ;
La figure 10 est une vue d'ensemble d'une voile en cours d'opération de pliage selon le second mode de réalisation de l'invention ;
La figure 11 est une vue d'ensemble d'une voile approchant du poste fixe selon un troisième mode de réalisation de l'invention ;
La figure 12 est une vue d'ensemble d'une voile ramenée au poste fixe selon le troisième mode de réalisation de l'invention ;
La figure 13 est une vue d'ensemble d'une voile en début d'opération de pliage selon le troisième mode de réalisation de l'invention ;
La figure 14 est une voile en cours d'opération de pliage selon le troisième mode de réalisation de l'invention ;
La figure 15 est une voile pliée selon le troisième mode de réalisation de l'invention ;
La figure 16 est une vue d'ensemble d'un système selon l'invention équipé d'un espace de stockage sous son mât représenté en début de rapatriement de cette voile dans l'espace de stockage ;
La figure 17 est une vue d'ensemble d'un système selon l'invention équipé d'un espace de rangement au pied du mât représenté au cours du rapatriement de la voile dans l'espace de stockage ;
La figure 18 est une vue d'ensemble d'un système selon l'invention équipé d'un espace de stockage sous son mât représenté lorsque la voile a été entièrement ramenée dans l'espace de stockage.

### EXPOSÉ DÉTAILLÉ DE MODES DE RÉALISATION PARTICULIERS

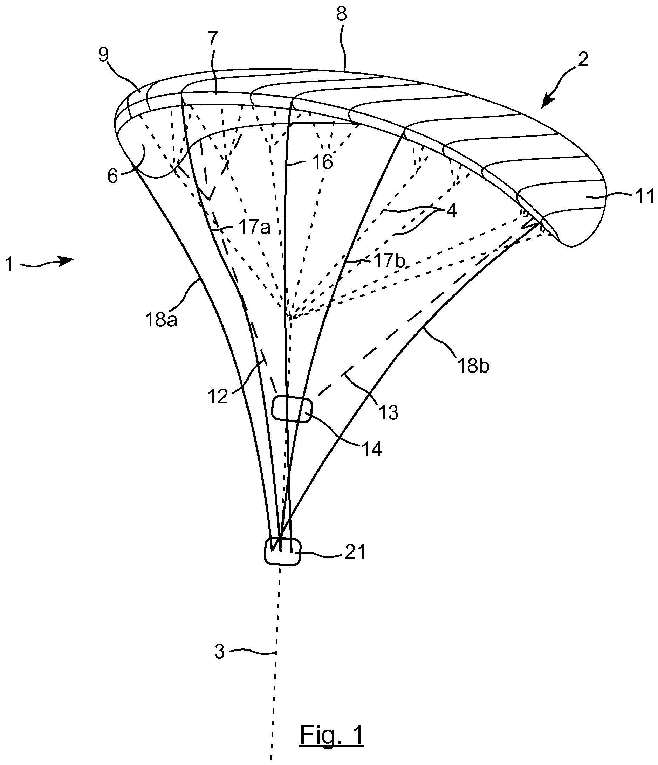

Sur la figure 1, une voile 1 conforme à l'invention comporte une aile souple 2 raccordée à un câble de traction 3 par un ensemble de suspentes 4 ayant chacune une extrémité reliée à une face inférieure 6 de l'aile 2 et une autre extrémité reliée à une extrémité du câble de traction 3.

L'aile 2 a une forme générale oblongue comportant un bord d'attaque 7 et un bord de fuite 8 s'étendant d'un côté gauche 9 à un côté droit 11 de cette aile, les côtés droits et gauche étant considérés comme sur la figure 1, c'est-à-dire pour un observateur situé face à la voile et dos au vent. Cette aile est formée de plusieurs parties de toile ou de tissu assemblés pour présenter un profil et une voûte adéquats pour obtenir une portance appropriée lorsque cette aile est dans un flux d'air. Cette voile 1 est également équipée de deux écoutes latérales 12, 13 ayant leurs extrémités fixées respectivement aux côtés gauche 9 et droit 11 de l'aile, leurs autres extrémités étant maintenues par un organe de commande 14 porté par le câble de traction 3.

Cette voile est également équipée d'une ligne de pliage supérieure centrale 16, d'une paire médiane de lignes de pliage latérales 17a, 17b et d'une paire inférieure de lignes de pliage latérales 18a, 18b. La ligne de pliage supérieure 16 comporte une extrémité supérieure fixée au milieu du bord d'attaque 7, et une extrémité inférieure portée par un élément bas 21 qui est lui-même porté par le câble de traction 3.

La ligne latérale médiane 17a comporte une extrémité supérieure fixée à mi-distance entre le milieu et l'extrémité gauche du bord d'attaque 7, et une extrémité inférieure portée par l'élément bas 21. La ligne latérale médiane 17b est symétrique de la ligne 17a en comportant une extrémité fixée à mi-distance entre le milieu et l'extrémité droite du bord d'attaque, et une autre extrémité portée par l'élément bas 21.

La ligne latérale inférieure 18a comporte une extrémité supérieure fixée à l'extrémité gauche du bord d'attaque 7, et une extrémité inférieure portée par l'élément bas 21. La ligne latérale inférieure 18b est symétrique de la ligne 18a, avec une extrémité fixée à l'extrémité droite du bord d'attaque 7, et une autre extrémité portée par l'élément bas 21.

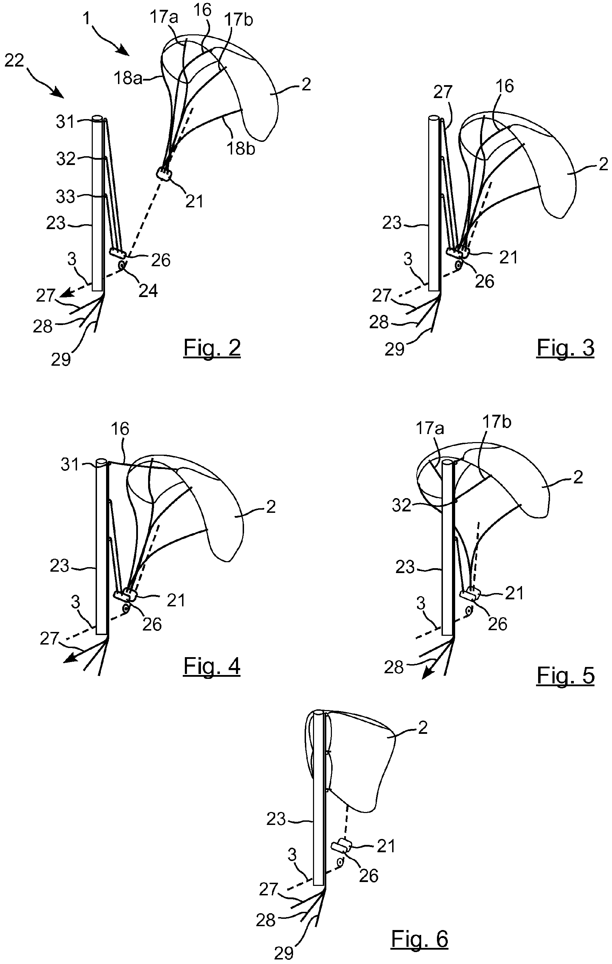

Cette voile 1 est reliée par le câble 3 à un poste fixe repéré par 22 sur la figure 2, qui équipe un pont de navire non représenté, pour former un ensemble capable de tracter le navire par exemple complémentairement à un système de propulsion équipant ce navire.

Le poste fixe 22 comporte un mât 23 s'étendant verticalement et il est équipé à sa base d'un treuil non représenté auquel est rattaché le câble de traction 3, ce câble 3 passant dans une poulie 24 située au voisinage de la base du mât. Ce poste fixe 22 comporte également une platine 26 située au voisinage de la base du mât et de la poulie 24, ainsi que trois lignes de commande 27, 28 et 29, dites respectivement supérieure, médiane et inférieure, permettant de plier la voile le long du mât 23.

La ligne de commande supérieure 27 comporte une extrémité reliée à un organe de commande de type treuil non représenté situé au voisinage de la base du mât, et elle longe ce mât 23 pour traverser un organe de renvoi, ici une poulie supérieure 31, porté par l'extrémité supérieure du mât, et elle s'étend jusqu'à la platine 26 qui maintient son autre extrémité.

La ligne de commande médiane 28 comporte elle aussi une extrémité reliée à un autre treuil non représenté et situé au voisinage de la base du mât. Elle longe ce mât 23 pour traverser un organe de renvoi, ici une poulie médiane 32 porté par le mât à environ les trois quarts de sa hauteur, et elle s'étend jusqu'à la platine 26 qui maintient son autre extrémité.

La ligne de commande inférieure 29 comporte elle aussi une extrémité reliée à un autre organe de commande de type treuil non représenté et situé au voisinage de la base du mât. Elle longe ce mât 23 pour traverser un organe de renvoi, ici une poulie inférieure 33, porté par le mât à environ la moitié de sa hauteur, et elle s'étend jusqu'à la platine 26 qui maintient son autre extrémité.

Le retour de la voile 1 au poste fixe 22 est assuré en actionnant le treuil du câble de traction 3, ce qui correspond à la situation de la figure 2, jusqu'à ce que l'élément bas 21 de cette voile soit à hauteur de la platine 26, comme représenté sur les figure 3.

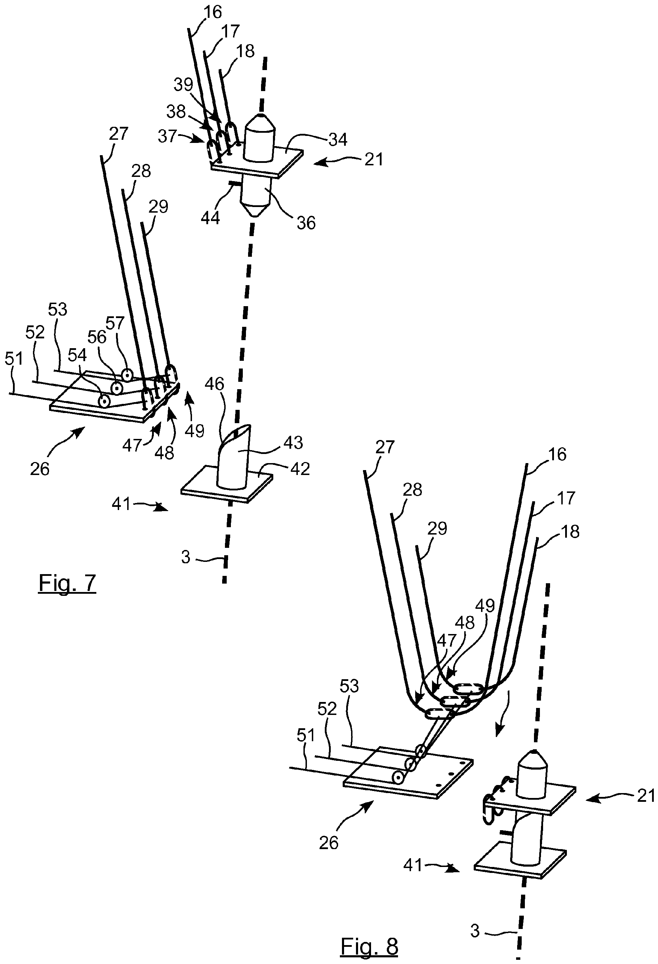

Comme visible sur la figure 7, l'élément bas 21 comporte une plaque 34 rigidement solidaire d'un fourreau 36 généralement cylindrique qui traverse sa région centrale, ce fourreau 36 étant orienté perpendiculairement à la plaque 34 et étant lui-même traversé par le câble de traction 3 auquel il est rigidement solidarisé.

Chaque ligne de pliage 16, 17a, 17b, 18a, 18b a son extrémité maintenue à l'élément bas 21 grâce à un mousqueton porté par cette extrémité et qui est engagé dans un trou correspondant formé dans la plaque 34. Dans l'exemple de la figure 7, la plaque 34 a un contour carré et elle comporte trois trous le long de l'un de ses bords, ces trous recevant respectivement les trois mousquetons 37, 38, 39 qui sont chacun portés par une extrémité de ligne de pliage.

Le premier mousqueton 37 est porté par une extrémité de la ligne de pliage supérieure 16, le deuxième mousqueton 38 est porté par les extrémités des lignes de pliage 17a et 17b, et le troisième mousqueton 39 est porté par les extrémités des lignes de pliage 18a et 18b.

Les lignes de pliage 17a et 17b de la paire médiane de lignes de pliage notée 17 ont ici leurs extrémités réunies au niveau du deuxième mousqueton 38, cette paire médiane 17 pouvant aussi se présenter sous forme d'un câble en forme de Y. Il en va de même des lignes 18a et 18b de la paire inférieure de lignes de pliage repérée par 18, dont les extrémités sont réunies au niveau du troisième mousqueton 39.

Comme visible sur les figures 7 et 8, le poste 22 est également équipé d'une embase fixe 41 de réception de l'élément bas 21. Cette embase 41 comporte une plaque support 42 percée en son centre et portant à sa face supérieure un engorgeoir tubulaire 43. La plaque 42 et l'engorgeoir 43 sont traversés par le câble de traction 3 qui peut coulisser dans l'embase.

En fin d'approche de la voile, le fourreau 36 vient s'engager dans l'engorgeoir 43 par sa partie inférieure, de sorte que l'élément bas 21 est alors positionné de façon précise à hauteur de la platine 26, c'est-à-dire en vis-à-vis de celle-ci. Dans cette situation, l'élément bas 21 est aussi orienté précisément par rapport à la platine 26, grâce à un ergot 44 dépassant radialement d'une portion inférieure du fourreau 36, et s'engageant dans une échancrure correspondante 46 de l'engorgeoir lorsque le fourreau s'emboîte dans cet engorgeoir.

Comme visible sur les figures 7 et 8, les lignes de commande 27, 28 et 29 ont leurs extrémités maintenues à la platine 26 par trois autres mousquetons 47, 48, 49. Cette platine 26 a ici une forme générale de plaque rectangulaire comportant trois trous le long de son bord situé en vis-à-vis de la plaque 34 de l'élément bas 21, ces trois trous recevant les mousquetons 47-49.

La ligne de commande supérieure 27 a son extrémité raccordée au quatrième mousqueton 47, la ligne de commande médiane 28 a son extrémité raccordée au cinquième mousqueton 48, et la ligne de commande inférieure 29 a son extrémité raccordée au sixième mousqueton 49.

Complémentairement, le poste fixe 22 comporte encore une ligne de rappel supérieure 51, une ligne de rappel médiane 52, et une ligne de rappel inférieure 53 dont les extrémités sont raccordées respectivement aux mousquetons 47, 48 et 49. Chaque ligne de rappel passe dans une poulie correspondante et a son extrémité opposée raccordée à un organe de commande de type treuil non représenté. Ces poulies 54, 56 et 57 sont portées par la platine 26.

Lorsque l'élément bas de la voile 1 a été complètement ramené, les extrémités des lignes de pliage 16-18 sont raccordées aux extrémités des lignes de commande 27-28, respectivement par les mousquetons 47-49. Concrètement, un opérateur ou un appareillage désolidarise l'extrémité de la ligne de pliage supérieure 16 de son mousqueton 37, et il passe cette extrémité dans le mousqueton 47. La même opération est réalisée pour les paires de lignes de pliage 17 et 18 afin de raccorder leurs extrémités aux lignes de commande 28 et 29, respectivement, ce qui correspond à la situation représentée sur la figure 8.

Une fois que les lignes de commande 27-29 ont été raccordées aux lignes de pliage 16-18, respectivement par les mousquetons 47-49, le treuil est actionné pour terminer de descendre l'ensemble de la voile, afin de pouvoir débuter les opérations de pliage de l'aile 2 le long du mat 23.

La ligne de commande supérieure 27, raccordée à la ligne de pliage supérieure 16, est alors tirée depuis la base du mat 23, comme illustré sur la figure 4, pour rapprocher le milieu du bord d'attaque auquel est accrochée la ligne 16, contre la poulie supérieure 31, c'est-à-dire contre l'extrémité supérieure du mat 23, ce qui correspond à la situation de la figure 5.

Comme on l'aura compris, lorsque la ligne 27 est tirée, le mousqueton 47 traverse l'organe de renvoi que forme la poulie supérieure 31 dans laquelle s'engage ensuite la ligne de pliage supérieure 16.

A ce stade, la ligne de commande supérieure 27 est bloquée, par exemple avec un taquet, et la ligne de commande médiane 28, qui est raccordée à la paire médiane 17 de lignes de pliage 17a, 17b, est à son tour tirée depuis la base du mat 23, comme illustré schématiquement sur la figure 5. Ceci permet de ramener la partie gauche et la partie droite du bord d'attaque contre la poulie médiane 32, c'est-à-dire contre le mat. Cette ligne 28 est alors bloquée. Là aussi, le mousqueton 48 traverse l'organe de renvoi que forme la poulie médiane 32 dans laquelle s'engagent ensuite les lignes de la paire 17 repliées.

La ligne de commande inférieure 29, qui est raccordée à la paire inférieure 18 de lignes de pliage 18a et 18b est ensuite tirée à son tour, pour ramener les extrémités gauche et droite de l'aile 2 contre la poulie inférieure 33, avant de bloquer cette ligne 29. Là aussi, le mousqueton 49 traverse l'organe de renvoi que constitue la poulie inférieure 33 dans laquelle s'engagent ensuite les lignes de la paire 18 repliées.

Dans cette situation représentée sur la figure 6, l'aile 2 est pliée contre le mat 23, c'est-à-dire repliée en deux avec le centre de son bord d'attaque contre l'extrémité supérieure du mat 23, les moitiés gauche et droite de son bord d'attaque s'étendant parallèlement l'une à l'autre le long du mat 23 en étant maintenues à celui-ci contre les poulies 31-33.

Dans l'explication qui vient d'être faite du pliage, les trois lignes de commandes ont été actionnées les unes après les autres pour faciliter la compréhension du processus, mais ces lignes peuvent aussi être actionnées simultanément ou selon une séquence différente consistant principalement à les tirer toutes pour plier l'aile contre le mât.

Dans le premier mode de réalisation de l'invention qui est illustré sur les figures 2 à 4, les extrémités des lignes de commandes 27-29 sont raccordées aux extrémités des lignes de pliage 16-18 pour ramener le bord d'attaque replié contre le mat 23, mais les lignes de commande peuvent aussi être utilisées différemment comme dans le cas du deuxième mode de réalisation de l'invention.

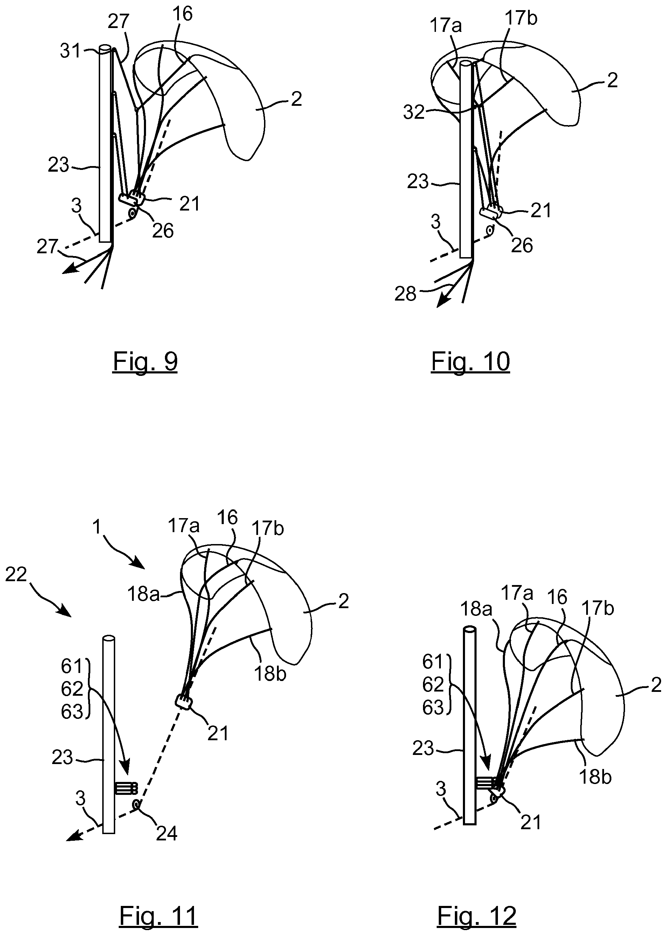

Dans ce deuxième mode de réalisation qui est illustré sur les figures 9 et 10, les lignes de pliage 16-18 ne sont pas désaccouplées de l'élément bas 21 pour plier l'aile. Lorsque l'élément bas de la voile a été ramené au poste fixe comme sur la figure 9, l'extrémité inférieure de la ligne de commande supérieure 27 est désolidarisée de la platine 26 pour être passée autour de la ligne de pliage supérieure 16 qui elle reste fixée par son extrémité à l'élément bas 21. Autrement dit, le quatrième mousqueton 47 terminant la ligne de commande 27 est décroché de la platine 26 pour être passé autour de la ligne de pliage supérieure 16, sans décrocher cette dernière de l'élément bas.

La ligne de commande supérieure 27 est alors actionnée pour ramener le milieu du bord d'attaque de l'aile contre la poulie supérieure 31, comme sur la figure 10. Comme on l'aura compris, lorsque la ligne 27 est tirée, le mousqueton 47 traverse l'organe de renvoi formé par la poulie supérieure 31 dans laquelle s'engage ensuite la ligne de pliage supérieure 16 repliée en deux.

De manière analogue, le cinquième mousqueton 48 terminant la ligne de commande médiane 28 est alors désolidarisé de la platine 26 pour être passé autour de la paire de lignes de pliage médianes 17, sans désolidariser celles-ci de l'élément bas. La ligne de commande médiane peut alors être tirée pour ramener les côtés du bord d'attaque contre le mat, comme représenté schématiquement sur la figure 10. Là aussi, le mousqueton 48 traverse l'organe de renvoi que constitue la poulie médiane 32 dans laquelle s'engagent ensuite les lignes de la paire médiane 17 repliées.

Finalement, le sixième mousqueton 49 terminant la ligne de commande inférieure 29 est désolidarisé de la platine 26 et passé autour de la paire de lignes de pliage inférieures 18, sans les désolidariser de l'élément bas. La ligne de commande inférieure peut alors être tirée pour ramener les extrémités de l'aile contre le mat. Là aussi, le mousqueton 49 traverse l'organe de renvoi que forme la poulie inférieure 33 dans laquelle s'engagent ensuite les lignes de la paire inférieure 18 repliées.

Lorsque la ligne 29 a été complètement tirée, la voile est pliée contre le mât, selon une configuration identique à celle de la figure 6.

Dans le troisième mode de réalisation, qui est illustré sur les figures 11 à 15, le mat est équipé d'un coulisseau supérieur 61, d'un coulisseau médian 62 et d'un coulisseau inférieur 63, déplaçables le long de ce mat 23. Chaque coulisseau 61-63 est équipé d'un organe de renvoi, ici un mousqueton, et le pliage est assuré uniquement avec les lignes de pliage. Dans ce troisième mode de réalisation, les lignes de pliage 16-18 ne sont pas désolidarisées de l'élément bas 21 pour plier la voile sur le mât.

Ces coulisseaux 61-63 sont positionnés en partie inférieure du mât 23 avant pliage de l'aile, comme par exemple lors de son approche comme sur la figure 11. Ces coulisseaux sont plus particulièrement positionnés pour être en vis-à-vis de l'élément bas 21 lorsque la voile est ramenée au poste fixe comme sur la figure 12.

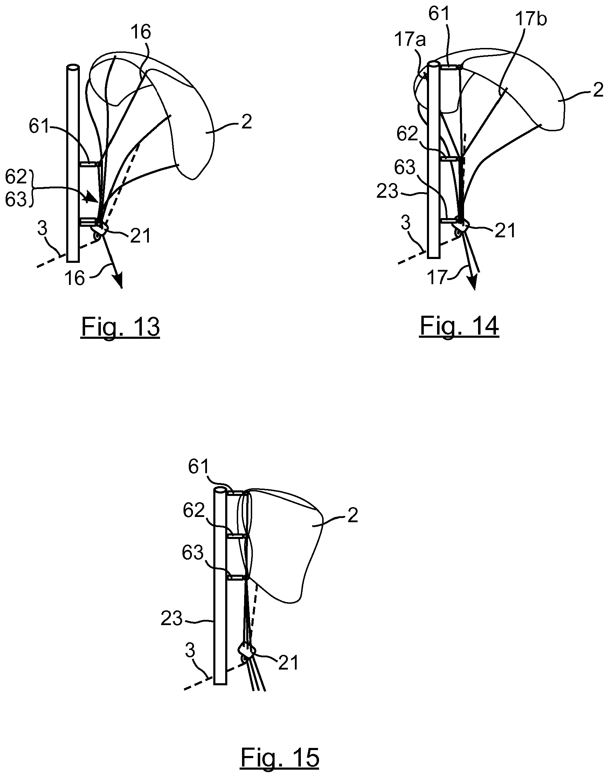

A ce stade, le mousqueton équipant l'extrémité du coulisseau supérieur est passé autour de la ligne de pliage supérieure 16, et il est déplacé le long du mât jusqu'à atteindre son sommet. Complémentairement, la ligne de pliage supérieure 16 est tirée vers le bas par son extrémité inférieure, comme illustré sur la figure 13. L'extrémité inférieure de la ligne 16 traverse par exemple l'élément bas 21 pour être solidarisée à celui-ci, tout en pouvant être tirée depuis la face inférieure de cet élément bas 21 de manière à coulisser à travers celui-ci.

Lorsque le coulisseau 61 a atteint sa position haute et que la ligne 16 a été complètement tirée, le centre du bord d'attaque de l'aile 2 est bloqué contre l'extrémité supérieure du mât, comme sur la figure 14.

A ce stade, le mousqueton du coulisseau médian 62 est passé autour de la paire 17 de lignes de pliage 17a et 17b avant de déplacer ce coulisseau 62 vers le haut jusqu'à sa position de référence située aux trois quarts de la hauteur du mât 23. La paire de lignes 17 est là aussi tirée vers le bas, sous l'élément bas 21, comme illustré sur la figure 14, pour ramener les parties gauche et droite du bord d'attaque de l'aile contre le mât.

Ensuite, le mousqueton du coulisseau inférieur 63 est passé autour de la paire 18 de lignes de pliage inférieures 18a, 18b, et ce coulisseau inférieur 63 est déplacé jusqu'à sa position de référence située ici à mi-hauteur du mât. Complémentairement, la paire de lignes 18 est tirée vers le bas sous l'élément bas 21 pour ramener les extrémités gauche et droite de l'aile contre le mât, de manière à terminer le pliage de la voile conformément à la figure 15.

Le pliage a là aussi été expliqué en manipulant successivement les coulisseaux 61, 62, 63 et les lignes 16, 17 et 18, mais les coulisseaux et les lignes peuvent être actionnés selon toute autre séquence appropriée, dès lors que cette séquence aboutit à placer les trois coulisseaux à leurs positions de références et à tirer complètement les lignes 16-18.

Une fois que l'aile a été pliée, elle peut être ferlée, c'est-à-dire que son bord de fuite peut être ramené au plus près du mât 23, de manière à réduire son encombrement selon une direction normale au mât. Cette opération de ferlage peut être réalisée au moyen de lignes de ferlage dédiées non représentées qui relient le bord d'attaque 7 de l'aile 2 à son bord de fuite selon un motif de type en zig-zag. L'opération de ferlage proprement dite consiste alors à tirer les lignes de ferlage pour ramener l'ensemble du bord de fuite 8 au plus près du bord d'attaque 7, c'est-à-dire au plus près du mât 23. La manipulation, c'est-à-dire la traction des lignes de ferlage qui ne sont pas représentées est analogue à celle des lignes de pliage, ces lignes de ferlage ayant avantageusement une extrémité portée par l'élément bas.

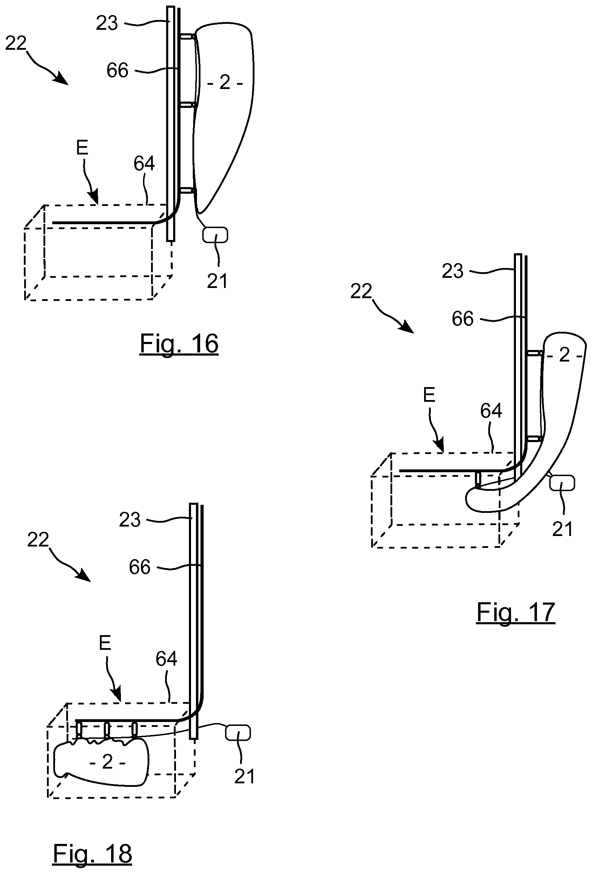

Une fois que l'aile 2 a été ferlée, elle est ramenée dans un espace de stockage situé au pied du mât 23, cet espace qui est repéré par E sur les figures 16 à 18 est entouré par une structure 64 située sous ou bien à côté du mât 23.

Plus particulièrement, les coulisseaux 61-63 sont montés dans un rail 66 dont une portion rectiligne équipe le mât 23, et qui se prolonge sous ce mât 23 par une portion incurvée elle-même prolongée par une extension horizontale située en partie supérieure de l'espace de stockage E.

Chaque coulisseau 61-63 est ainsi déplaçable le long du rail depuis sa position de référence le long du mat, jusqu'à l'extension horizontale du rail située sous le mât 23.

Une fois que l'aile 2 a été pliée et ferlée contre le mât 23, le système est commandé pour déplacer les coulisseaux 61-63 le long de leur rail, vers le bas. Durant ce déplacement, la partie inférieure de la voile pliée atteint d'abord le pied du mât 23, comme sur la figure 16, pour ensuite s'engager dans la portion incurvée, comme visible sur la figure 17, afin de se positionner entièrement le long de la portion horizontale de ce rail, c'est-à-dire dans l'espace de stockage E.

Comme il ressort des figures 16 et 18, lorsque l'aile 2 est rangée dans l'espace E, elle est plissée pour occuper dans l'espace E une longueur très inférieure à sa longueur lorsqu'elle est pliée le long du mât. La longueur de l'aile pliée le long du mât correspond à sa demi-envergure, et la longueur qu'elle occupe une fois dans l'espace E est de l'ordre du tiers de cette longueur dans l'exemple des figures.

Les coulisseaux 61-63 sont faiblement espacés les uns des autres lorsqu'ils sont dans l'espace E, en comparaison avec l'espacement qui les sépare le long du mât lorsque l'aile est pliée.

Les coulisseaux 61-63 peuvent être maintenus et déplacés dans le rail au moyen d'un convoyeur par exemple d'une chaine non représentée courant dans ce rail, et agencée pour à la fois limiter l'espacement maximal des coulisseaux 61-63 les uns par rapport aux autres, et pour les autoriser à être rapprochés les uns des autres lorsqu'ils sont situés dans la portion horizontale du rail. La portion inférieure du rail est prévue pour permettre aux portions de chaine séparant les coulisseaux de s'écarter du rail, afin que cette chaîne puisse occuper une configuration en serpentin permettant de rapprocher les coulisseaux les uns des autres.

L'agencement qui vient d'être décrit en ce qui concerne les coulisseaux du troisième mode de réalisation est similaire dans le cas des premiers et deuxième modes de réalisation : les poulies 31-33 sont alors elles aussi prévues coulissantes dans un rail en étant maintenues les unes aux autres par une chaine permettant de les déplacer lorsque nécessaire.

Par ailleurs, dans les exemples qui ont été décrits, les lignes de pliage ont leurs extrémités inférieures maintenues à l'élément bas avant pliage, mais ces lignes de pliage peuvent avoir leurs extrémités inférieures libres, pour être simplement saisies et raccordées aux extrémités des lignes de commande dans le cas du premier mode de réalisation.

En outre, les lignes de pliage sont des lignes dédiées dans les exemples qui ont été décrits, mais ces lignes de pliage peuvent aussi constituer des suspentes de l'aile, ayant dans ce cas deux fonctions complémentaires.

D'une manière générale, le dépliage de l'aile est obtenu en réalisant les mêmes séquences que pour son pliage, mais en ordre inverse. Avant déconnexion des lignes entre la platine 26 et l'élément bas 21, les lignes de rappel 51-53 permettent de ramener les mousquetons 47-49 à proximité de la platine et de l'élément bas.

## Revendications

1. Système de traction, notamment pour navire, comprenant une voile (1) et un poste fixe (22) incluant un mat (23) et un treuil relié à la voile (1) par un câble de traction (3), comportant :
- plusieurs lignes de pliage (16-18) ayant chacune une extrémité fixée à un bord d'attaque (7) de la voile (1) en étant espacées les unes des autres le long de ce bord d'attaque (7) ;
**caractérisé en ce qu'**il comprend des moyens pour tirer au moins trois lignes de pliage (16-18), afin de ramener les extrémités de ces lignes de pliage fixées au bord d'attaque (7) contre le mât (23) à au moins deux hauteurs différentes le long de ce mât (23).

2. Système selon la revendication 1 comprenant :
- un élément bas (21) porté par le câble de traction (3), chaque ligne de pliage (16-18) ayant une extrémité portée par cet élément bas (21) ;
- une embase (41) équipant le poste fixe (22) et recevant l'élément bas (21) lorsque la voile (1) est ramenée par le treuil ;
- des organes de renvoi tels que des poulies (31-33) ou des mousquetons équipant le mât (23) pour recevoir des lignes de pliage (16-18) ;
- des moyens pour tirer chaque ligne de pliage (16-18) reçue dans un organe de renvoi (31-33), afin de ramener l'extrémité supérieure de chaque ligne de pliage contre le mât (23).

3. Système selon la revendication 2, dans lequel les moyens pour tirer chaque ligne de pliage (16-18) comprennent des lignes de commande (27-29) qui longent le mât (23) en étant passées dans les organes de renvoi (31-33) avant de ramener la voile (1) avec le treuil, ces lignes de commande (27-29) étant ensuite raccordées aux lignes de pliage (16-18) pour tirer sur ces lignes de pliage (16-18).

4. Système selon la revendication 3, dans lequel le poste fixe (22) comporte une platine (26) et dans lequel chaque ligne de commande (27-29) comporte une extrémité équipée d'un organe de raccordement (47-49) fixé à cette platine (26) en attente avant de ramener la voile (1) avec le treuil.

5. Système selon la revendication 3, dans lequel le poste fixe (22) comporte des treuils pour tirer sur chaque ligne de commande (27-29).

6. Système selon la revendication 3, dans lequel chaque ligne de commande (27-29) a une extrémité équipée d'un organe de raccordement (47-49) à une extrémité d'une ligne de pliage (16-18).

7. Système selon la revendication 3, dans lequel chaque ligne de commande (27-29) a une extrémité équipée d'un organe de raccordement (47-49) à une partie de ligne de pliage (16-18) située entre les extrémités de cette ligne de pliage (16-18).

8. Système selon la revendication 1 ou 2, dans lequel le mât (23) est équipé de coulisseaux (61-63) portant chacun un organe de renvoi apte à être raccordé à une partie de ligne de pliage (16-18) située entre les extrémités de cette ligne de pliage (16-18) en l'entourant, chaque coulisseau étant mobile le long du mât, et des moyens pour tirer des lignes de pliage (16-18) reçue dans un organe de raccordement.

## Patentansprüche

1. Zugsystem, insbesondere für ein Schiff, das ein Segel (1) und eine feste Station (22) umfasst, welche einen Mast (23) und eine Winde einschließt, die durch ein Zugseil (3) mit dem Segel (1) verbunden ist, umfassend:
- mehrere Faltlinien (16-18), von denen jeweils ein Ende an einer Anströmkante (7) des Segels (1) befestigt ist, wobei sie entlang dieser Anströmkante (7) voneinander beabstandet sind;
**dadurch gekennzeichnet, dass** es Mittel umfasst, um mindestens drei Faltlinien (16-18) zu ziehen, um die an der Anströmkante (7) befestigten Enden dieser Faltlinien auf mindestens zwei verschiedenen Höhen entlang dieses Mastes (23) zum Mast (23) einzuholen.

2. System nach Anspruch 1, umfassend:
- ein unteres Element (21), das vom Zugseil (3) getragen wird, wobei jede Faltlinie (16-18) ein Ende aufweist, das von diesem unteren Element (21) getragen wird;
- eine Basis (41), mit der die feste Station (22) ausgestattet ist und die das untere Element (21) aufnimmt, wenn das Segel (1) über die Winde eingeholt wird;
- Umlenkglieder wie etwa Rollen (31-33) oder Karabiner, mit denen der Mast (23) ausgestattet ist, um Faltlinien (16-18) aufzunehmen;
- Mittel, um jede Faltlinie (16-18), die in einem Umlenkglied (31-33) aufgenommen ist, zu ziehen, um das obere Ende jeder Faltlinie zum Mast (23) einzuholen.

3. System nach Anspruch 2, wobei die Mittel, um jede Faltlinie (16-18) zu ziehen, Steuerlinien (27-29) umfassen, die am Mast (23) entlanglaufen, indem sie in die Umlenkglieder (31-33) geführt werden, bevor das Segel (1) mit der Winde eingeholt wird, wobei diese Steuerlinien (27-29) anschließend mit den Faltlinien (16-18) verbunden werden, um an diesen Faltlinien (16-18) zu ziehen.

4. System nach Anspruch 3, wobei die feste Station (22) eine Platte (26) umfasst, und wobei jede Steuerlinie (27-29) ein Ende umfasst, das mit einem Verbindungsglied (47-49) ausgestattet ist, das bereitstehend an dieser Platte (26) befestigt wird, bevor das Segel (1) mit der Winde eingeholt wird.

5. System nach Anspruch 3, wobei die feste Station (22) Winden umfasst, um an jeder Steuerlinie (27-29) zu ziehen.

6. System nach Anspruch 3, wobei jede Steuerlinie (27-29) ein Ende aufweist, das mit einem Glied zum Verbinden (47-49) mit einem Ende einer Faltlinie (16-18) ausgestattet ist.

7. System nach Anspruch 3, wobei jede Steuerlinie (27-29) ein Ende aufweist, das mit einem Glied zum Verbinden (47-49) mit einem Teil der Faltlinie (16-18), der zwischen den Enden dieser Faltlinie (16-18) liegt, ausgestattet ist.

8. System nach Anspruch 1 oder 2, wobei der Mast (23) mit Schlitten (61-63) ausgestattet ist, die jeweils ein Umlenkglied, das mit einem Teil einer Faltlinie (16-18), der zwischen den Enden dieser Faltlinie (16-18) liegt, verbunden werden kann, indem es diesen umschließt, wobei jeder Schlitten entlang des Masts beweglich ist, und Mittel tragen, um Faltlinien (16-18), die in einem Verbindungsglied aufgenommen sind, zu ziehen.

## Claims

1. Traction system, notably for a ship, comprising a sail (1) and a fixed station (22) including a mast (23) and a winch connected to the sail (1) by a traction cable (3), comprising:
- several folding lines (16-18) each one having an end fastened to a leading edge (7) of the sail (1) by being spaced apart from one another along this leading edge (7);
**characterized in that** it comprisesmeans for pulling at least three folding lines (16-18), so as to bring back the ends of these folding lines fastened to the leading edge (7) against the mast (23) to at least two different heights along this mast (23).

2. System according to claim 1 comprising:
- a base unit (21) carried by the traction cable (3), each folding line (16-18) having an end carried by this base unit (21);
- a socket (41) fitted to the fixed station (22) and receiving the base unit (21) when the sail (1) is brought back by the winch;
- deflection members such as pulleys (31-33) or snap hooks fitted to the mast (23) to receive the folding lines (16-18);
- means for pulling each folding line (16-18) received in a deflection member (31-33), so as to bring back the upper end of each folding line against the mast (23).

3. System according to claim 2, wherein the means for pulling each folding line (16-18) comprise control lines (27-29) that run alongside the mast (23) by having passed through the deflection members (31-33) before bringing the sail (1) back with the winch, these control lines (27-29) then being connected to the folding lines (16-18) to pull on these folding lines (16-18).

4. System according to claim 3, wherein the fixed station (22) comprises a plate (26) and wherein each control line (27-29) comprises an end fitted with a connection member (47-49) fastened to this plate (26) on hold before bringing the sail (1) back with the winch.

5. System according to claim 3, wherein the fixed station (22) comprises winches to pull on each control line (27-29).

6. System according to claim 3, wherein each control line (27-29) has an end fitted with a connection member (47-49) at an end of a folding line (16-18).

7. System according to claim 3, wherein each control line (27-29) has an end fitted with a connection member (47-49) to a folding line portion (16-18) located between the ends of this folding line (16-18).

8. System according to claim 1 or 2, wherein the mast (23) is fitted with sliders (61-63) each carrying a deflection member able to be connected to a folding line portion (16-18) located between the ends of this folding line (16-18) by surrounding it, each slider being mobile along the mast, and means for pulling folding lines (16-18) received in a connection member.
